# EUROPÄISCHE PATENTANMELDUNG

(11) **EP 0 917 968 A2**
(43) Veröffentlichungstag der Anmeldung: **26.05.1999**
(21) Anmeldenummer: 98119020.0
(22) Anmeldetag: 08.10.1998
(51) Int. Cl.: B60B 27/00

(54) **Vorrichtung zur Lagerung eines Rades**

(30) Priorität: 09.10.1997 DE 19744552
(71) Anmelder: Continental Teves AG & Co. oHG, 60488 Frankfurt (DE)
(72) Erfinder: Döll, Andreas, 60439 Frankfurt (DE); Schorn, Michael, 65520 Bad Camberg (DE); Kautenburger, Michael, 61352 Bad Homburg (DE); Rettig, Marc-Oliver, 50733 Köln (DE)

(57) **Zusammenfassung**

Vorgeschlagen wird eine Vorrichtung zur Lagerung eines nicht angetriebenen Rades bei einem Kraftfahrzeug oder dergleichen mit einem Trägerbauteil, einer Radnabe und einem Wälzlager.

Die erfindungsgemäße Vorrichtung ist dadurch gekennzeichnet, daß
- die Radnabe (1) einstückig mit einem Tragzapfen ausgebildet ist,
- ein ein- oder zweiteiliger Innenring (2a) des Wälzlagers (2) auf dem Tragzapfen (1a) befestigt ist und daß
- als Trägerbauteil ein Achskörper (3) mit einer Bohrung (3a) zur Aufnahme eines Außenrings (2b) des Wälzlagers (2) vorgesehen ist.

Da der Außenring des Wälzlagers unmittelbar im Achskörper (3) angeordnet ist, ist eine Verschraubung zur Befestigung der Lagervorrichtung am Fahrzeug nicht mehr erforderlich. Da der Innenring durch Rollnieten am Tragzapfen (1a) der Radnabe (1) befestigt ist, entfällt auch die sonst übliche Lagereinstellung bei der Endmontage. Die erfindungsgemäßen Maßnahmen führen dazu, daß die Anzahl der Bauteile und auch der Aufwand bei der Endmontage verringert werden.

## Beschreibung

Die Erfindung betrifft eine Vorrichtung zur Lagerung eines nicht angetriebenen Rades mit einem Trägerbauteil, einer Radnabe und einem Wälzlager.

Bei derartigen Vorrichtungen besteht das Trägerbauteil häufig aus einem Achszapfen, der mit einer fahrzeugseitigen Halterung, vorzugsweise mit einer senkrecht und in Fahrzeuglängsrichtung angeordneten Platte einer Achsvorrichtung, verbunden wird. Dabei wird zwischen der fahrzeugseitigen Platte und einem innenliegenden Flansch des Achszapfens ein Schmutzblech eingeklemmt, das bei Trommelbrems-Ausführungen gleichzeitig als Tragbauteil für den Bremszylinder und die Bremskörper dient. Auf dem Achszapfen ist dabei üblicherweise ein zweiteiliger Innenring eines Wälzlagers angeordnet, dessen Außenring in eine Radnabe eingepreßt und axial beispielsweise durch einen Seegerring gesichert ist. Der Achszapfen besitzt endseitig ein Schraubgewinde, auf das eine Mutter aufgesetzt wird, mit der der zweiteilige Innenring zur Einstellung des Wälzlagers verspannt werden kann. Auf der Radnabe ist eine Bremsscheibe oder Bremstrommel befestigt, wobei eine zur Übertragung der Bremskräfte geeignete Verbindung zwischen Radnabe und Bremsscheibe bzw. Bremstrommel erst durch die Verbindungsmittel geschaffen wird, mittels derer die Radfelge an der Radnabe befestigt wird.

Daneben werden von der Wälzlagerindustrie Vorrichtungen zur Lagerung angetriebener oder nicht angetriebener Räder von Fahrzeugen angeboten, bei denen der Innnen- und/oder Außenring des Wälzlagers besonders ausgestaltet ist, damit er weitere Funktionen übernehmen kann. Ferner werden Lösungen angeboten, bei denen der Innen- und/oder Außenring des Wälzlagers entfallen kann, weil die Radnabe und/oder der Achszapfen aus Wälzlagermaterial hergestellt sind und daher unmittelbar als Abrollfläche genutzt werden können. Auf diese Weise kann man zwar die Anzahl der Lagerbauteile verringern, muß aber in der Regel mehr höherwertiges Wälzlagermaterial einsetzen, so daß wirtschaftliche Vorteile nicht oder allenfalls in sehr geringem Umfang erzielt werden können.

Der Erfindung liegt die Aufgabe zugrunde, eine gattungsmäßige Vorrichtung so weiterzubilden, daß die Anzahl der Einzelteile der Lagerbaueinheit verringert werden kann, ohne daß mehr Wälzlagermaterial erforderlich ist und ohne daß die Montage dadurch erschwert wird.

Zur Lösung dieser Aufgabe wird vorgeschlagen, daß bei der eingangs genannten Vorrichtung zur Lagerung eines nicht angetriebenen Rades die Radnabe einstückig mit einem Tragzapfen ausgebildet wird, daß auf dem Tragzapfen ein ein- oder zweiteiliger Innenring eines Wälzlagers befestigt ist und daß als Trägerbauteil ein Achskörper mit einer Bohrung zur Aufnahme eines Außenrings des Wälzlagers vorgesehen wird.

Statt der bisher üblichen Achsvorrichtung mit einer Montage-Schnittstelle in Form einer senkrecht und in Fahrzeuglängsrichtung angeordneten Platte, an die der Achszapfen angeschraubt werden mußte, wird nunmehr ein Achskörper mit einer Bohrung zur Aufnahme des Außenrings des Wälzlagers vorgesehen, wobei andererseits die Radnabe einstückig mit einem Tragzapfen ausgebildet ist, auf dem der Innenring des Wälzlagers angeordnet werden kann. Erfindungsgemäß können also der mit der fahrzeugseitigen Achsvorrichtung zu verschraubende Achszapfen einschließlich zugehöriger Befestigungsmittel und auch die Verschraubung zur Einstellung des Wälzlagers entfallen. Stattdessen ist der Innenring des Wälzlagers bereits fertig mit dem Tragzapfen der Radnabe verbunden, vorzugsweise durch Aufpressen und Rollnieten, wobei der innenliegende Rand des Tragzapfens nach außen umgelegt und gegen den Innenring angedrückt wird. Der Außenring des Wälzlagers wird bei der Montage in den Achskörper eingepreßt und in Umfangsrichtung gesichert, wie noch erläutert wird.

Der Achskörper ist außen vorzugsweise kreiszylindrisch ausgebildet, so daß auf ihn eine Baueinheit, umfassend ein Schmutzblech, einen Bremszylinder und einen Bremskörper aufgepreßt werden kann. Durch eine oder mehrere radial angeordnete Schrauben kann die Baueinheit in Umfangsrichtung mit dem Achskörper befestigt werden, wobei diese Schrauben gleichzeitig zur Sicherung des Außenrings des Wälzlagers im Achskörper herangezogen werden können. Schließlich ist vorgesehen, daß die Radnabe in an sich bekannter Weise achsparallele Bohrungen zur Befestigung einer Radfelge sowie einer Bremsschreibe bzw. Bremstrommel aufweist.

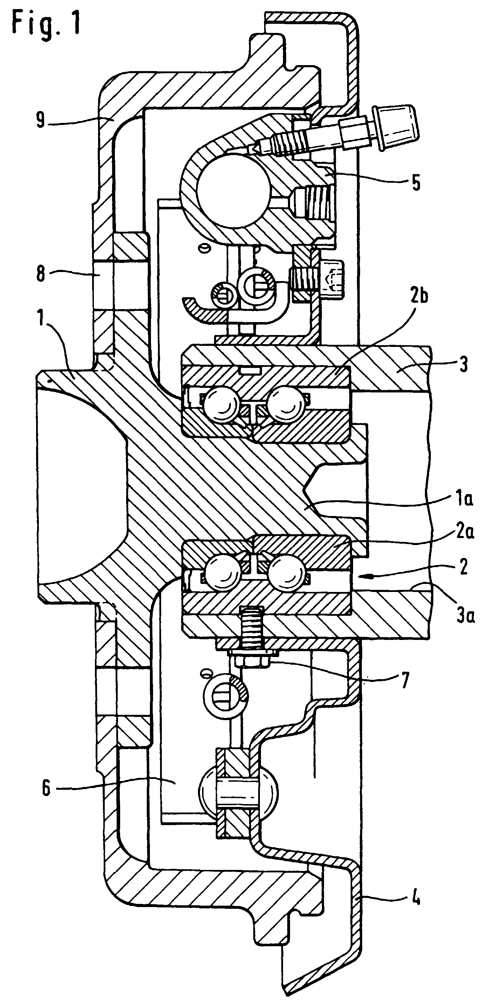

Weitere Einzelheiten werden anhand des in Fig. 1 dargestellten Ausführungsbeispiels näher erläutert.

Fig. 1 zeigt einen Schnitt durch eine erfindungsgemäße Vorrichtung zur Lagerung eines nicht angetriebenen Rades bei einem Kraftfahrzeug oder dergleichen, wobei die Radnabe 1 einstückig mit einem Tragzapfen 1a ausgebildet ist, als Trägerbauteil ein Achskörper 3 mit einer Bohrung 3a zur Aufnahme eines Außenrings 2b eines Wälzlagers 2 vorgesehen ist und ein ein- oder zweiteiliger Innenring 2a eines Wälzlagers 2 auf dem Tragzapfen 1a befestigt ist. Die axiale Fixierung und Einstellung des Lagers wird bei der Vormontage vorgenommen, wobei ein axial nach innen vorstehender Rand des Tragzapfens 1a durch Rollnieten nach außen umgelegt und gegen den Innenring 2a des Wälzlagers angedrückt wird. Auf diese Weise wird eine mit hoher Genauigkeit reproduzierbare Einstellung des Wälzlagers erreicht. Gleichzeitig entfällt die Einstellung bei der Endmontage, was von den Automobilherstellern sehr begrüßt wird, weil man bestrebt ist, den Aufwand bei der Endmontage so klein wie möglich zu halten. Der Außenring 2b des Wälzlagers 2 ist in den Achskörper 3 eingepreßt und zusätzlich durch wenigstens eine radial angeordnete Schraube 7 gesichert. Diese Schraube 7 dient gleichzeitig zur Festlegung eines Schmutzbleches 4, das als Trägerbauteil für einen Bremszylinder 5 und Bremskörper 6 dient und das außen auf den zylindrisch ausgebildeten Achskörper 3 unter Ausbildung eines Preßsitzes aufgeschoben ist. Das Schmutzblech dient in an sich bekannter Weise auch als Trägerbauteil für weitere, hier nicht interessierende und daher nicht genannte Bauteile.

Auf die Radnabe 1 ist eine Bremstrommel 9 aufgesetzt und mit der Radnabe 1 in einer Weise verbunden, die für Lagerung, Transport und Montage ausreicht, nicht aber für die Übertragung der Bremskräfte. Diese werden mittels derselben Verbindungsmittel übertragen, die zur Befestigung der Radfelge an der Radnabe vorgesehen sind. Zu diesem Zweck sind in der Radnabe und in der Bremstrommel korrespondierende achsparallele Bohrungen 8 vorgesehen.

Die erfindungsgemäße Vorrichtung hat den Vorteil, daß zur Befestigung an der fahrzeugseitigen Achsvorrichtung keine Verschraubungen erforderlich sind und daß die Festlegung des Innenrings auf dem Tragzapfen der Radnabe herstellerseitig erfolgt, womit eine weitere Vereinfachung der Endmontage verbunden ist.

## Patentansprüche

1. Vorrichtung zur Lagerung eines nicht angetriebenen Rades mit einem Trägerbauteil, einer Radnabe und einem Wälzlager, **dadurch gekennzeichnet,** daß
- die Radnabe (1) einstückig mit einem Tragzapfen (1a) ausgebildet ist,
- ein ein- oder zweiteiliger Innenring (2a) des Wälzlagers (2) auf dem Tragzapfen (1a) befestigt ist und daß
- als Trägerbauteil ein Achskörper (3) mit einer Bohrung (3a)zur Aufnahme eines Außenrings (2b) des wälzlagers (2) vorgesehen ist.

2. Vorrichtung nach Anspruch 1, **dadurch gekennzeichnet,** daß der ein- oder zweiteilige Innenring (2a) des Wälzlagers (2) durch Aufpressen und Rollnieten auf dem Tragzapfen (1a) befestigt ist.

3. Vorrichtung nach Anspruch 1 oder 2, **dadurch gekennzeichnet,** daß eine ein Schmutzblech(4), einen Bremszylinder (5) und einen Bremskörper (6) umfassende Baueinheit außen auf dem zylindrisch ausgebildeten Achskörper (3) befestigt ist.

4. Vorrichtung nach Anspruch 3, **dadurch gekennzeichnet,** daß die Baueinheit auf dem Achskörper (3) aufgepreßt und zusätzlich durch wenigstens eine radial angeordnete Schraube (7) gesichert ist.

5. Vorrichtung nach Anspruch 4, **dadurch gekennzeichnet,** daß die Schraube (7) gleichzeitig zur Sicherung des Außenrings (2b) des Wälzlagers (2) im Achskörper (3) dient.

6. Vorrichtung nach einem der Ansprüche 1 bis 5, **dadurch gekennzeichnet,** daß die Radnabe (1) in an sich bekannter Weise achsparallele Bohrungen (8) zur Befestigung einer Radfelge sowie einer Bremsscheibe bzw. Bremstrommel (9) aufweist.
